# EUROPÄISCHE PATENTSCHRIFT

(11) **EP 2 533 887 B1**
(45) Veröffentlichungstag und Bekanntmachung des Hinweises auf die Patenterteilung: **12.08.2015**
(21) Anmeldenummer: 11704016.2
(22) Anmeldetag: 20.01.2011
(51) Int. Cl.: B01J 8/36, B01J 8/44

(54) **ANSTRÖMBODEN FÜR EINEN FLUIDISIERUNGSAPPARAT**
FLOW ACCEPTING BASE FOR A FLUIDIZING APPARATUS
FOND DE SOUFFLAGE POUR UN APPAREIL DE FLUIDISATION

(30) Priorität: 12.02.2010 AT 2072010
(43) Veröffentlichungstag der Anmeldung: 19.12.2012
(73) Patentinhaber: Andritz Technology and Asset Management GmbH, 8045 Graz (AT)
(72) Erfinder: STANKE, Klaus, 88255 Baienfurt (DE); KRÖHL, Paul, 88212 Ravensburg (DE)
(74) Vertreter: Schweinzer, Friedrich
(86) Internationale Anmeldenummer: PCT/AT2011/000035
(87) Internationale Veröffentlichungsnummer: WO 2011/097660

(56) Entgegenhaltungen:
- EP-A1- 0 474 949
- US-A- 4 115 929
- US-A- 4 787 152

## Beschreibung

Die Erfindung betrifft einen Anströmboden für einen Fließbettapparat mit Durchtrittsöffnungen und überdeckend darüber angeordneten Umlenkleisten, wobei die Umlenkleisten länglich ausgebildet und Abstandshalter aufweisen, die einen Ausströmquerschnitt am Umfang der Umlenkleiste für das Fluidisierungsgas bilden, wobei die Bodendurchtrittsöffnungen vorteilhafterweise mit länglichem Querschnitt ausgeführt sein können.

In Wirbelschichtanlagen (Fluidisierungsapparaten) werden Schüttgüter behandelt (getrocknet, gekühlt, getempert, ...). Das zu behandelnde Gut gelangt in den Apparat, wird fluidisiert und statistisch zum Überlauf gefördert. Zum Entleeren und Austragen von Grobgut dient der Unterlauf. Die Fluidisierung erfolgt durch das vom Gebläse in den Luftkasten geförderte Gas, welches gleichmäßig durch den Anströmboden in die Produktschicht strömt. Das Gas verlässt den Apparat über die Entstaubung, angesaugt von einem Gebläse.

Zur gleichmäßigen Verteilung des Gasmengenstroms in Wirbelschichtapparaten werden Anströmböden unterschiedlichster Konstruktionen eingesetzt. Die Anströmböden vereinen eine oder mehrere Funktionen, um einen stabilen Betrieb des Apparates zu ermöglichen. Dies sind u. a.:
- Gleichmäßige Verteilung des Gasstroms über die Fläche, auch bei lokal unterschiedlichen Gegendrücken in der Wirbelschicht infolge Blasenbildung, Sekundärströmungen etc.
- Trennung von Gasraum (Luftkasten) und Produktschicht, insbesondere verhindern des Durchrieselns von Produkt in den Gasraum.
- Vermeiden von toten, nicht gasdurchströmten Flächen, da dort Produktansammlungen entstehen, die thermisch geschädigt werden können und nur unzureichend am Produktaustausch der Wirbelschicht teilnehmen.
- Fördern von Partikeln, die wegen ihrer Größe nicht ausreichend fluidisiert werden können und auf den Anströmboden absinken.

Die gleichmäßige Gasverteilung wird erreicht, indem der Anströmboden in Relation zu den auftretenden Druckschwankungen der Produktschicht einen ausreichenden Druckverlust aufweist. Idealerweise wird dieser durch möglichst verlustfreie Beschleunigung der Strömung erreicht, d.h. durch möglichst vollständige Umwandlung der Druck- in Bewegungsenergie, damit ein maximaler Impulsübertrag auf die Partikel stattfindet (CH 629394).

In der Praxis werden Druckverluste von 50-300 daPa häufig eingesetzt, da sie einen guten Kompromiss zwischen Funktionssicherheit und Energiebedarf darstellen. Das bedeutet, dass die verwendeten Anströmböden einen durchströmten, freien Querschnitt von typisch 0,5-15% der gesamten Fläche aufweisen.

Dies wird realisiert durch Sieb-, Sinter-, Loch,- oder Stanzböden, deren freier Querschnitt fein verteilt auf der Gesamtfläche ist, oder durch Düsenböden, bei denen der freie Querschnitt auf wenige Düsen konzentriert ist.

Während des Betriebs ist bei richtig dimensioniertem Druckverlust und nicht zu großen Öffnungen kein Durchrieseln von Produkt zu erwarten. Beim Abstellen muss dies jedoch durch die Geometrie gewährleistet werden, wie z.B. sehr kleine Öffnungen (abhängig vom Partikeldurchmesser, aber häufig < ca. 0,2 mm bei Loch-, Sieb-, und Stanzböden), die jedoch insbesondere beim Kreisgasbetrieb zu Verstopfungen neigen, oder Überdeckungen (größer als dem Schüttkegel entspricht) der Öffnungen mit Tellern, Leisten, etc. (vgl. EP 0103708, CH 629394) Auch selbstschließende Düsen sind z.B. aus der Kolonnentechnik (Gas/Flüssig-Wirbeischicht) bekannt.

Auf diesen Überdeckungen lagert sich jedoch im Betrieb Produkt ab, da diese Flächen im Windschatten liegen. Durch Montage von Verdrängungskörpern auf diesen Flächen wird das verhindert (vgl. EP0215327; EP 0103708). Dadurch entsteht ein erhöhter Aufwand und im Falle von quer zur Hauptförderrichtung des Produkts liegenden Leisten ein zusätzlicher Widerstand beim Fördern von Grobgut.

Weiters sind Anströmböden aus der US 4 787 152 bekannt. Bei dieser Ausführung tritt durch die kastenartige Anordnung des Bettes ein erheblicher Druckverlust auf. Auch wird durch die vorgesehenen Blöcke der Austrittsquerschnitt eingeengt und es können hier ungewünschte Ablagerungen (im Inneren des Kastens) auftreten. Die US 4 115 929 zeigt Gasverteiler für Fließbettapparate. Hier wird das Material zwar stark verwirbelt, ein Transport in Materialflussrichtung erfolgt aber nicht, wodurch einerseits Grobgut und andererseits bei einem Stillstand alles Material in den Kanälen liegen bleibt.

Für die Förderung ungenügend fluidisierten Grobguts gibt es technisch realisierte Lösungen. Die Förderung kann zum einen mechanisch unterstützt werden durch Vibration des gesamten Wirbelschichtapparats oder nur von Luftkasten oder Anströmböden. Um diesen erheblichen konstruktiven Aufwand und weitere Nachteile zu vermeiden, wird durch entsprechende Ausbildung des Anströmbodens eine pneumatische Förderwirkung erzielt.
- bei gestanzten Blechböden wird durch asymmetrische Werkzeuge ein einseitig offenes Loch erzeugt, aus dem das Gas schräg nach vorne und oben ausströmt und somit einen Impulsübertrag parallel zum Boden auf die Partikel ausübt (Markennamen u. a. Conidur, Coniperf).
- bei Düsenböden mit rotationssymmetrischen Spalten strömt das Gas in der Regel bereits parallel zur Bodenplatte, jedoch in alle Richtungen. Durch verschließen von mindestens der Hälfte des Spaltes mit einer geeigneten Beilagscheibe lässt sich jede gewünschte Ausström- und damit Förderrichtung einstellen.
- bei Düsenböden mit abgedeckten Querspalten ist die Förderrichtung durch die Anordnung der Spalte fest vorgegeben. Durch die quer liegenden Deckleisten wird die Förderung jedoch behindert.

Die Anströmböden nach dem Stand der Technik weisen jedoch Nachteile auf, die durch die erfindungsgemäße Ausgestaltung vermieden werden:
- gestanzte Böden weisen aus fertigungstechnischen Gründen nur geringe Blechdicken auf und sind daher verschleiß- und temperaturempfindlich und vom Einsatzgebiet begrenzt.
- der Impuls des mit hoher Geschwindigkeit austretenden Gasstroms wird durch die Wirbelschicht nach wenigen Zentimetern abgebaut, zur Aufrechterhaltung der Förderung sind viele, entsprechend eng verteilte Düsen erforderlich, was zusätzlichen Aufwand und vermehrte Hindernisse bedeutet.
- Düsenböden mit Querspalten neigen zu Ablagerungen auf den Abdeckleisten, eine Montage von Verdrängerkörpern ist nicht möglich, ohne die Förderung weiter zu behindern.

Ziel der Erfindung ist es daher einen Anströmboden zu schaffen, der neben einer guten Vermischung und Verwirbelung auch eine Förderung des Grobmaterials bewirkt.

Dies erfolgt erfindungsgemäß dadurch, dass die Umlenkleisten längs im Fließbettapparat, parallel zur Hauptströmungsrichtung des Produkts, oberhalb der Durchtrittsöffnungen der Bodenplatte angeordnet und die Abstandshalter als Leitbleche ausgebildet sind wobei zwischen jeweils zwei Leitblechen ein Öffnungswinkel gebildet wird, wobei der Winkel vorteilsweise ein spitzer Winkel sein kann und beispielsweise zwischen 30° und 90° beträgt und wobei die als Leitbleche ausgebildeten Abstandshalter dem Fluidisierungsgas eine Strömungsrichtung aufprägen, die parallel zur Bodenplatte ist und eine Komponente in der Hauptströmungsrichtung des Produkts aufweist.. Durch diese Maßnahmen wird eine gute Fluidisierung des Grobguts bei gleichzeitiger Förderbarkeit desselben erzielt. Dadurch, dass die Abstandshalter als Leitbleche ausgebildet sind wird eine gezielte Förderung des Produktstromes ermöglicht. Weiters kann damit die Behandlung des Gutes, z.B. Trocknung, Kühlung, etc. gezielt gesteuert werden. Besonders günstig hat sich erwiesen, wenn durch die Höhe der Abstandshalter ein Druckverlust der durchströmten Bodenplatte von 40 -500 daPa eingestellt wird. Damit kann ein besonders guter Kompromiss zwischen Funktionssicherheit und Energiebedarf erzielt werden.

Die prismenförmigen Umlenkleisten können an Querleisten unterhalb der Bodenplatte befestigt sein. Als besonders günstig hat sich erwiesen, wenn die Prismen an in der Bodenplatte ausgebildeten Stegen befestigt sind.

Eine vorteilhafte Weiterbildung der Erfindung ist dadurch gekennzeichnet, dass die Prismen die als separate Zwischenstücke ausgebildeten Abstandshalter an der Bodenplatte festklemmen.

Die Erfindung wird nun anhand der Zeichnungen beispielhaft beschrieben, wobei
Fig. 1 ein Schema eines Fluidisierungsapparates,
Fig. 2 einen Schnitt durch einen erfindungsgemäßen Anströmboden,
Fig. 3 eine Draufsicht auf einen erfindungsgemäßen Anströmboden gemäß Fig. 2,
Fig. 4 einen Querschnitt durch einen Anströmboden gemäß Fig. 2,
Fig. 5 einen Querschnitt durch eine weitere Variante eines erfindungsgemäßen Anströmbodens,
Fig. 6 eine Draufsicht auf einen erfindungsgemäßen Anströmboden,
Fig. 7 eine Draufsicht auf eine Anordnung eines erfindungsgemäßen Anströmbodens,
Fig. 8 eine Draufsicht auf eine weitere Variante eines erfindungsgemäßen Anströmbodens und
Fig. 9 einen Schnitt durch einen Anströmboden nach Fig. 8 entlang der Linie IX-IX darstellt.

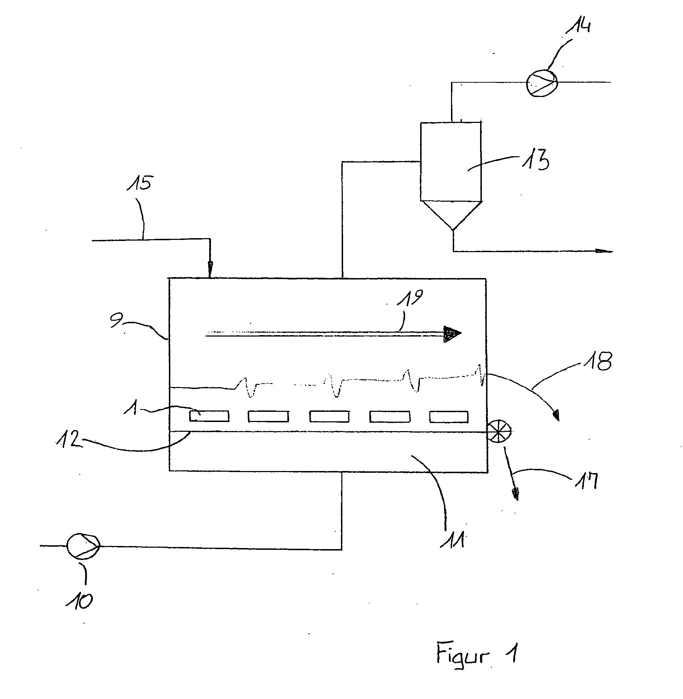

Fig. 1 zeigt eine Wirbelschichtanlage (Fluidisierungsapparat) in der Schüttgüter behandelt (getrocknet, gekühlt, getempert, ...) werden. Das zu behandelnde Gut 15 gelangt in den Fluidisierungsapparat 9, wird fluidisiert und statistisch in Produktflussrichtung (Pfeil 19) zum Überlauf 18 gefördert. Zum Entleeren und Austragen von Grobgut dient der Unterlauf 17. Die Fluidisierung erfolgt durch das vom Gebläse 10 in den Luftkasten 11 geförderte Gas, welches gleichmäßig durch den Anströmboden 12 in die Produktschicht strömt. Über dem Anströmboden 12 sind eine Anzahl von Umlenkleisten 1 angeordnet. Das Gas verlässt den Apparat über die Entstaubung 13, angesaugt von Gebläse 14.

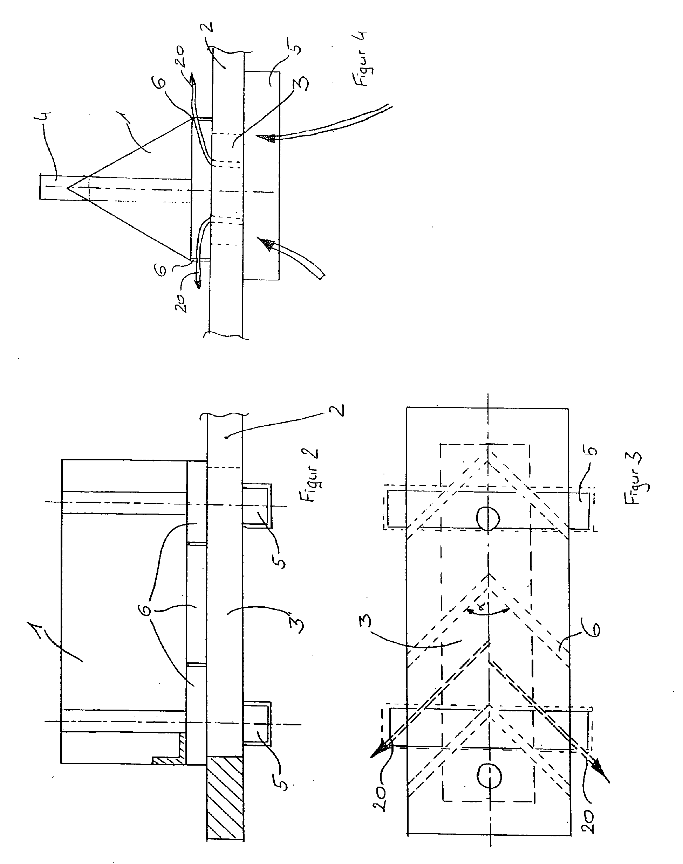

Eine Variante eines erfindungsgemäßen Anströmbodens ist in Fig. 2 dargestellt. Sie weist längs angeordnete Durchtrittsöffnungen (Düsen) auf. Die Umlenkung des Gasstroms parallel zur Bodenplatte und die Abdeckung der Durchtrittsöffnungen 3 in der Bodenplatte 2 des Anströmbodens 12 erfolgt durch Umlenkleisten 1, die hier als dreiecksförmige, prismatische Hohlkörper dargestellt sind.

In der Draufsicht in Fig. 3 sind die Leitbleche 6 erkennbar, die oberhalb der Durchtrittsöffnung 3 angeordnet sind und das austretende Gas in Richtung der Pfeile 20 lenken. Der Öffnungswinkel *α* zwischen zwei Leitblechen 6 bestimmt das Ausmaß der Förderung. Die Leitbleche 6 können mit den Enden aneinander stoßen, oder sich nur bis zur Durchtrittsöffnung 3 in der Bodenplatte 2 erstrecken, wobei darauf zu achten ist, dass mit einer genügenden Überlappung eine sichere Umlenkung des Gasstroms gewährleistet wird. Fig. 4 zeigt den Querschnitt durch Fig. 2, woraus besonders gut die Prismenform der Umlenkleiste 1 erkennbar ist. Die Befestigung der prismenförmigen Umlenkleisten 1 auf der Bodenplatte 2 kann vielfältig erfolgen, z. B. mittels Schrauben, die durch Führungen 4 gesteckt werden und die Umlenkleiste 1 mit quer unter den Durchtrittsöffnungen 3 liegenden Profilen 5 gegen Bodenplatte 2 verspannen. Diese Variante ist insbesondere für Hochtemperaturanwendungen zur Aufnahme der Spannungen geeignet. Eine andere Möglichkeit ist die Verwendung von in die Bodenplatte 2 integrierten Stegen an Stelle der Profile 5 und an den Umlenkleisten 1 verschweißte Gewindestücke statt durchgesteckter Schrauben.

Die Breite (Länge der Dreiecksgrundseite) der Umlenkleisten 1 ist so gewählt, dass ein Bereich von 20 bis 80%, typisch um 50% der Gesamtbodenbreite des Fließbettapparats abgedeckt wird. Die Höhe ist vorteilhafterweise gleich oder größer als der entsprechende Produktschüttkegel, um Ablagerungen zu vermeiden. Der Haupteffekt dieser Anordnung ist jedoch, dass im Bereich der Prismen, oberhalb der Bodenplatte, eine deutlich höhere Gasgeschwindigkeit herrscht, als im restlichen Bereich der Wirbelschicht. Das führt dazu, dass das abgesunkene Grobgut im Bereich zwischen den Prismen immer noch fluidisiert oder zumindest in Bewegung gehalten wird. Durch weitere Anhebung der Prismenhöhe bis zu einem Vielfachen der Grundseite kann dieser Bereich ausgedehnt werden, um auch größere Grobgutmengen zu beherrschen.

Mit dieser Anordnung werden die eigentlich unvereinbaren Forderungen: niedrige Fluidisierungsgeschwindigkeit zur Minimierung des Staubaustrags und hohe Fluidisierungsgeschwindigkeit zur Förderung auch des Grobgutanteils, in einer Wirbelschicht vorteilhaft realisiert.

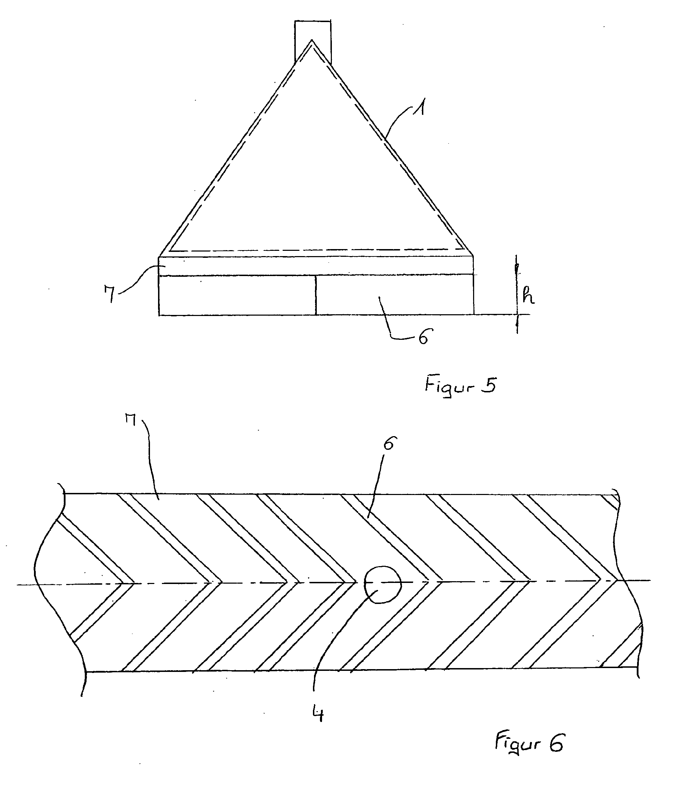

Eine weitere Variante der Erfindung ist in Fig. 5 und Fig. 6 (Draufsicht) dargestellt. Um Druckverlust und Gasmengen durch Veränderung der Kanalhöhe h anpassen zu können, ist es vorteilhaft, die Leitbleche 6 nicht direkt an die Umlenkleisten 1 zu schweißen, sondern auf Trägerplatten 7, die ihrerseits lösbar an den Umlenkleisten 1 befestigt sind, anzuordnen.

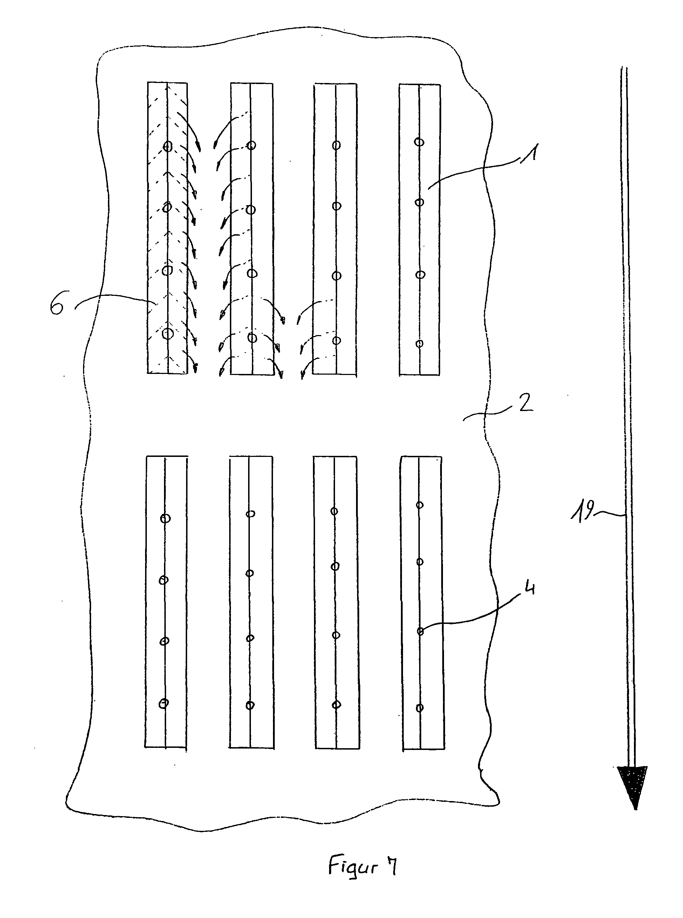

Fig. 7 zeigt eine Anordnung des erfindungsgemäßen Anströmbodens 12, wobei hier eine weitere Verbesserung der Fördereigenschaften des Bodens erreicht wird, indem man dem ausströmenden Gas im Ausströmquerschnitt eine Richtungskomponente längs zur Düse aufprägt. Die Zwischenräume zwischen benachbarten Umlenkleisten 1 bilden auf der Bodenplatte 2 glatte Kanäle, die den Wirbelschichtapparat 9 vom Produkteintrag 15 zum Produktaustrag 18 in Produktflussrichtung 19 durchziehen. Durch eine geeignete Abzugsvorrichtung am Ende des Apparats 9 in Höhe der Bodenplatte 2, z. B. eine Zellenradschleuse oder Schnecke, wird das bewegte Grobgut erfasst und ausgetragen. Das Nachfördern des weiter vorne befindlichen Grobguts wird durch die Gasströmungskomponenten in Kanalrichtung unterstützt. Die Strömungsrichtung des Gases wird durch Leitbleche 6 im Düsenspalt vorgegeben.

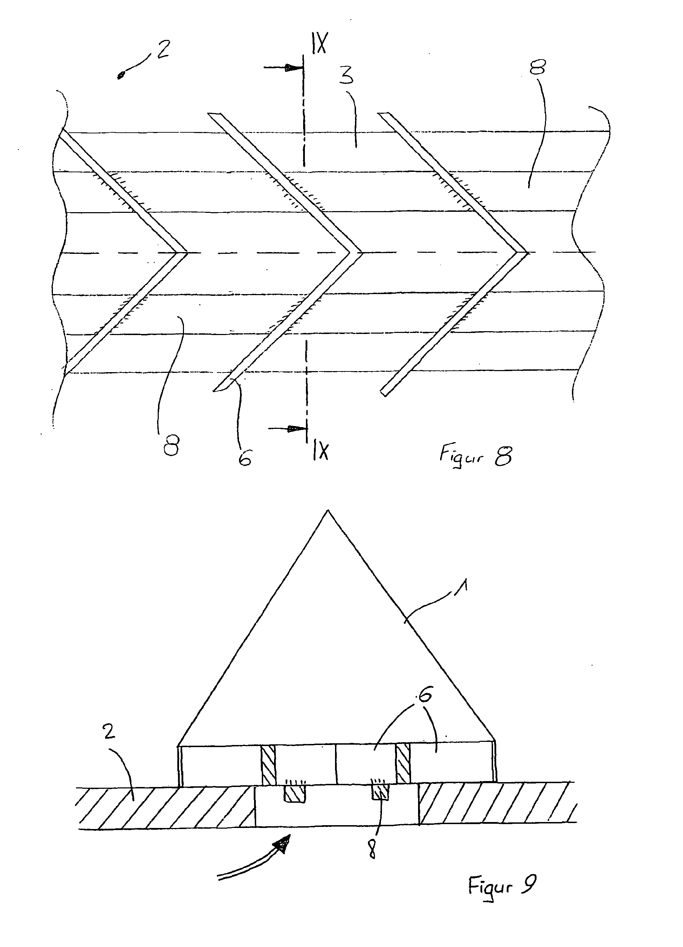

Fig. 8 zeigt eine andere Möglichkeit der Befestigung der Leitbleche. Die Leitbleche 6 werden hier an Trägerleisten 8 befestigt und dieses Gerippe wird zwischen Bodenplatte 2 und Umlenkleiste 1 geklemmt. Fig. 9 zeigt einen Schnitt dieser Ausführung entlang Linie IX-IX in Fig. 8.

## Patentansprüche

1. Anströmboden für einen Fließbettapparat mit Durchtrittsöffnungen und überdeckend darüber angeordneten Umlenkleisten, wobei die Umlenkleisten (1) länglich ausgebildet sind und Abstandshalter (6) aufweisen, die einen Ausströmquerschnitt am Umfang der Umlenkleiste (1) für das Fluidisierungsgas bilden, wobei die Bodendurchtrittsöffnungen (3) vorteilhafterweise mit länglichem Querschnitt ausgeführt sein können, **dadurch gekennzeichnet, dass** die Umlenkleisten (1) längs im Fließbettapparat (9), parallel zur Hauptströmungsrichtung (19) des Produkts, oberhalb der Durchtrittsöffnungen (3) der Bodenplatte (2) angeordnet und die Abstandshalter als Leitbleche (6) ausgebildet sind wobei zwischen jeweils zwei Leitblechen (6) ein Öffnungswinkel (α) gebildet wird, wobei der Winkel (α) vorteilsweise ein spitzer Winkel sein kann und beispielsweise zwischen 30° und 90° beträgt, und wobei die als Leitbleche ausgebildeten Abstandshalter (6) dem Fluidisierungsgas eine Strömungsrichtung (20) aufprägen, die parallel zur Bodenplatte (2) ist und eine Komponente in der Hauptströmungsrichtung (19) des Produkts aufweist.

2. Anströmboden nach Anspruch 1, **dadurch gekennzeichnet, dass** durch die Höhe der Abstandshalter (6) ein Druckverlust der durchströmten Bodenplatte von 40 -500 daPa eingestellt wird.

3. Anströmboden nach einem der Ansprüche 1 oder 2, **dadurch gekennzeichnet, dass** die Abstandshalter als separate Zwischenstücke mit Kanäle formenden Leitblechen (6) ausgebildet sind.

4. Anströmboden nach einem der Ansprüche 1 bis 3, **dadurch gekennzeichnet, dass** die Umlenkleisten (1) prismenförmig ausgestaltet sind, wobei die Prismen dreiecksförmig und mit der Spitze nach oben montiert sein können und vorteilhafterweise der Spitzenwinkel zwischen 10° und 130°, beispielsweise zwischen 50° und 70° beträgt.

5. Anströmboden nach Anspruch 4, **dadurch gekennzeichnet, dass** die prismenförmigen Umlenkleisten (1) an Stegen in der Bodenplatte (2) befestigt sind.

6. Anströmboden nach Anspruch 4, **dadurch gekennzeichnet, dass** die Umlenkleisten (1) an Querleisten (5) unterhalb der Bodenplatte (2) befestigt sind.

7. Anströmboden nach einem der Ansprüche 4 bis 6, **dadurch gekennzeichnet, dass** die Umlenkleisten (1) die als separate Zwischenstücke ausgebildeten Abstandshalter (6) an die Bodenplatte (2) festklemmen.

## Claims

1. Distributor plate for fluidized bed equipment with openings and deflection strips arranged directly above them, where the deflection strips (1) have an oblong shape and spacers (6) that form an outflow cross-section around the periphery of the deflection strip (1) for the fluidizing gas and where the base plate openings (3) can be designed advantageously with an oblong cross-section, **characterised by** the deflection strips (1) being mounted longitudinally in the fluidized bed equipment (9), in parallel to the main flow direction (19) of the product above the openings (3) in the base plate (2), and the spacers being formed as guide plates (6), where an opening angle (α) is formed between two guide plates (6) in each case, where it is an advantage if the angle (α) can be an acute angle measuring between 30° and 90° for example, and where the spacers (6) shaped as guide plates apply a flow direction (20) to the fluidizing gas that is parallel to the base plate (2) and has one component in the main flow direction (19) of the product.

2. Distributor plate according to Claim 1, **characterised by** a pressure loss by the base plate with the air flowing through being set at 40 - 500 daPa by means of the height of the spacers (6).

3. Distributor plate according to one of Claims 1 or 2, **characterised by** the spacers being formed as separate intermediate pieces with guide plates (6) forming channels.

4. Distributor plate according to one of Claims 1 to 3, **characterised by** the deflection strips (1) being designed in a prism shape, where the prisms can be triangular and mounted with the tip pointing upwards, with the point angle advantageously between 10° and 130°, for example between 50° and 70°.

5. Distributor plate according to Claim 4 **characterised by** the prismshaped deflection strips (1) being secured to fixed bars in the base plate (2).

6. Distributor plate according to Claim 4, **characterised by** the deflection strips (1) being secured to cross bars (5) underneath the base plate (2).

7. Distributor plate according to one of Claims 4 to 6, **characterised by** the deflection strips (1) clamping the spacers (6) formed as separate intermediate pieces to the base plate (2).

## Revendications

1. Plaque de distribution pour un appareil à lit fluidisé, comportant des ouvertures de passage et des barrettes directement superposées là-dessus, où les barrettes de déflexion (1) ont une forme oblongue et comportent des entretoises (6) qui forment une section transversale d'échappement du gaz de fluidisation au périmètre de la barrette de déflexion, la section transversale des ouvertures de passage du fond (3) pouvant avantageusement avoir une forme oblongue, **caractérisée en ce que** la barrette de déflexion (1) est disposée dans l'appareil à lit fluidisé (9) longitudinalement en parallèle avec le sens principal d'écoulement (19) du produit, au dessus des ouvertures de passage (3) de la dalle de fond (2) et les entretoises ont la forme d'un déflecteur (6), où un angle d'ouverture (α) se forme entre deux déflecteurs (6) à la fois, cet angle (α) pouvant avantageusement être un angle aigu et pouvant se situer par exemple entre 30° et 90° et où les entretoises étudiées sous forme de déflecteurs (6) imposent un sens d'écoulement (20) au gaz de fluidisation qui est en parallèle avec la dalle de fond (2) et a un composant au sens principal d'écoulement (19) du produit.

2. Plaque de distribution 1, **caractérisée en ce qu'**une perte de pression dans la dalle de fond par laquelle l'air s'écoule est réglée à 40 - 500 daPa moyennant la hauteur des entretoises (6).

3. Plaque de distribution selon l'une des revendications 1 ou 2, **caractérisée en ce que** les entretoises sont étudiées en tant que pièces intermédiaires séparées, avec des déflecteurs (6) formant des canaux.

4. Plaque de distribution selon l'une des revendications 1 à 3, **caractérisée en ce que** les barrettes de déflexion (1) ont la forme d'un prisme, les prismes pouvant avoir la forme d'un triangle et être montées avec sa pointe tournée vers le haut et l'angle de pointe étant situé entre 10° et 130°, par exemple entre 50° et 70°.

5. Plaque de distribution selon la revendication 4, **caractérisée en ce que** les barrettes de déflexion en forme de prisme (1) sont fixées à des âmes dans la dalle de fond (2).

6. Plaque de distribution selon la revendication 4, **caractérisée en ce que** les barrettes de déflexion (1) sont montées à des barrettes transversales (5) au-dessous de la dalle de fond (2).

7. Plaque de distribution selon l'une des revendications 4 à 6, **caractérisée en ce que** les barrettes de déflexion (1) coincent les entretoises (6) étudiées sous forme des pièces intermédiaires séparées à la dalle de fond (2).
